# EUROPÄISCHE PATENTSCHRIFT

(11) **EP 2 951 432 B1**
(45) Veröffentlichungstag und Bekanntmachung des Hinweises auf die Patenterteilung: **12.12.2018**
(21) Anmeldenummer: 14711922.6
(22) Anmeldetag: 03.02.2014
(51) Int. Cl.: F03D 7/02

(54) **STEUERVORRICHTUNG FÜR EIN GIERSYSTEM EINER WINDKRAFTANLAGE**
CONTROL DEVICE FOR A YAW SYSTEM OF A WIND POWER PLANT
DISPOSITIF DE COMMANDE POUR UN SYSTÈME DE LACET D'ÉOLIENNE

(30) Priorität: 01.02.2013 DE 102013101012
(43) Veröffentlichungstag der Anmeldung: 09.12.2015
(73) Patentinhaber: 2-B Energy Holding B.V., 7556 PE Hengelo (NL)
(72) Erfinder: JAKOBSSON, Johan Mikael, Grants Pass, Oregon 97527 (US); PEELS, Huibertus, 7631 HS Ootmarsum (NL)
(74) Vertreter: Bossmeyer, Jörg Peter
(86) Internationale Anmeldenummer: PCT/EP2014/052068
(87) Internationale Veröffentlichungsnummer: WO 2014/118375

(56) Entgegenhaltungen:
- EP-A2- 2 101 058
- WO-A1-2011/057664
- DE-T2- 69 703 622
- DE-U1-202008 010 748
- JP-A- 2004 232 500
- US-A- 4 966 525

## Beschreibung

Die Erfindung betrifft eine Steuervorrichtung für ein Giersystem einer Windkraftanlage, mit wenigstens einer zwischen eine Tragstruktur und einen an der Tragsstruktur um eine Gierachse drehbar gelagerten Maschinenträger geschalteten und einen Antrieb und ein Getriebe umfassenden Stelleinrichtung und wenigstens einer Gierbremse, mittels welcher der Maschinenträger an der Tragstruktur festlegbar ist.

Die US 4 966 525 A offenbart eine Giervorrichtung zum Drehen einer auf einem Turm drehbar gelagerten Gondel einer Windkraftanlage, mit einem starr mit dem Turm verbundenen Zahnkranz und wenigstens zwei Getriebemotoren, die rings des Zahnkranzes getrennt voneinander angeordnet sind, wobei jeder der Getriebemotoren ein mit dem Zahnkranz in Eingriff stehendens Antriebsritzel aufweist. Von jedem Getriebemotor ist ein Drehmoment abgebbar, welches in Richtung und Betrag einem von dem anderen Getriebemotor abgebbaren Drehmoment entgegengesetzt bzw. gleich ist, sodass die Gondel in einer Betriebsposition gehalten werden kann. Ferner sind wenigstens zwei mit den Getriebemotoren in Eingriff stehende und elektrisch betriebene Reibungsbremsen vorgesehen. Jeder Getriebemotor umfasst einen elektrischen Motor und ein Getriebe, wobei die Reibungsbremsen jeweils zwischen dem elektrischen Motor und dem Getriebe des jeweiligen Getriebemotors angeordnet sind.

Die JP 2004 232500 A beschreibt einen Gierantrieb für die Gondel einer Windkraftanlage, mit einem Getriebe und einem Motor, mittels welchem die Gondel unter Zwischenschaltung des Getriebes drehbar ist, wobei zwischen dem Motor und dem Getriebe eine Kupplung und eine Bremse angeordnet sind. Die Kupplung ist entweder zwischen dem Motor und dem Getriebe oder in dem Getriebe angeordnet, wobei eine Motorbremse an einer Motorwelle auf einer dem Getriebe abgewandten Seite des Motors vorgesehen sein kann. Falls die Windgeschwindigkeit einen vorgeschrieben Wert bei ausgesetzter Stromerzeugung übersteigt, werden die Kupplung und die Bremse gelöst, sodass die Gondel frei drehen kann.

Die DE 20 2008 010 748 U1 offenbart eine Verstelleinrichtung für eine Windenergieanlage zum Einstellen einer Azimutausrichtung und/oder einer Pitchausrichtung umfassend mindestens einen Antriebsmotor, wobei die Verstelleinrichtung weiter mindestens eine mit dem Antriebsmotor wirkverbundene Induktionsbremse umfasst. Die Verstelleinrichtung umfasst weiter ein Getriebe, wobei die Induktionsbremse zwischen dem Antriebsmotor und dem Getriebe angeordnet ist. Ferner ist eine Haltebremse vorgesehen, die auf einer der Induktionsbremse abgewandten Seite des Antriebsmotors vorgesehen ist.

Die WO 2011/057664 A1 beschreibt eine Vorrichtung zum Justieren eines schwenkbar montierten Rotorblattes eines Windenergiewandlers, mit einem ersten Antrieb und einem zweiten Antrieb, die zusammenwirken, um das Rotorblatt zwischen einer aus dem Wind genommenen Position und einer in den Wind gedrehten Position zu drehen, und einer ersten aktivierbaren Betriebssperre, die mit dem Rotorblatt verbunden ist und die in einem aktivierten Zustand das Drehen des Rotorblattes in die in den Wind gedrehte Position verhindert, aber das Drehen des Rotorblattes in die aus dem Wind genommene Position gestattet, einem Detektor zum Detektieren eines Ausfalls des ersten Antriebs, und einer Steuereinheit, die den zweiten Antrieb veranlasst, das Rotorblatt in die aus dem Wind genommene Position zu drehen, wenn der Detektor den Ausfall des ersten Antriebs detektiert hat.

Aus der DE 697 03 622 T2 ist eine Vorrichtung für eine Windkraftanlage bekannt, die für die Übertragung und Dämpfung von Gierbewegungen vorgesehen ist, wobei die Vorrichtung ein Gier-Lager und einen Gierbewegungsdrehantrieb, die eine Rotation der Maschinenanlage um eine vertikale Achse ermöglichen sowie eine Antriebsvorrichtung zum Antrieb der Maschinenanlage um eine vertikale Achse umfasst. Ferner ist eine Kupplung zur Übertragung des Momentes der Antriebsvorrichtung zu dem Gierbewegungsdrehantrieb vorgesehen und derart angeordnet, dass das durch die Kupplung übertragene Moment durch die Differenz der Drehbewegungsgeschwindigkeit der Antriebs- und Abtriebswelle der Kupplung ermittelt wird. Die Antriebsvorrichtung weist eine Bremse, einen durch die Bremse blockierbaren Elektromotor und ein mit dem Elektromotor unter Zwischenschaltung der Kupplung gekoppeltes Getriebe auf.

Bei blockierter Bremse wird eine durch Wind hervorgerufene Gierbewegung durch die Kupplung gedämpft. Zusätzlich können Gierbremsen vorgesehen sein, mit welchen eine Gierbewegung blockierbar ist. Ein Blockieren der Gierbewegung ist z.B. aus Sicherheitsgründen gewünscht, wenn Wartungspersonal an der Maschinenanlage und/oder im Bereich des Maschinenträgers arbeitet.

Herkömmliche Gierbremsen sind an der Schnittstelle von Tragstruktur und Maschinenträger, insbesondere am oder im Bereich des Gierlagers, angeordnet. Da die von den Gierbremseh aufzubringenden Bremskräfte groß sind, werden die Gierbremsen entsprechend stark ausgelegt, was mit nicht unerheblichen Kosten verbunden ist.

Ausgehend hiervon liegt der Erfindung die Aufgabe zugrunde, die Kosten für das Blockieren einer Gierbewegung reduzieren zu können.

Diese Aufgabe wird erfindungsgemäß durch eine Steuervorrichtung nach Anspruch 1 gelöst. Bevorzugte Weiterbildungen der Erfindung sind in den Unteransprüchen und in der nachfolgenden Beschreibung gegeben.

Die erfindungsgemäße Steuervorrichtung, insbesondere für ein Giersystem einer Windkraftanlage, weist wenigstens eine zwischen eine Tragstruktur und einen an der Tragsstruktur um eine Gierachse drehbar gelagerten Maschinenträger geschaltete und einen Antrieb und ein, insbesondere mit diesem gekoppeltes, Getriebe umfassende Stelleinrichtung und wenigstens eine Gierbremse auf, mittels welcher der Maschinenträger, insbesondere unverdrehbar, an der Tragstruktur festlegbar ist, wobei die Gierbremse zwischen dem Antrieb und dem Getriebe am Triebstrang der Stelleinrichtung angreift.

Zwischen dem Antrieb und dem Getriebe reichen vergleichsweise kleine Bremskräfte aus, um das Getriebe und somit auch eine Drehung des Maschinenträgers um die Gierachse zu blockieren. Grund dafür ist das Übersetzungsverhältnis des Getriebes, welches insbesondere größer als 1, vorzugsweise sogar größer als 100 oder 1000, ist. Aus diesem Grund kann die Gierbremse schwächer ausgebildet werden, wodurch Kosten eingespart werden können.

Das Getriebe ist insbesondere eingangsseitig mit dem Antrieb und ausgangsseitig mit dem Maschinenträger oder mit der Tragstruktur gekoppelt. Bevorzugt umfasst das Getriebe eine mit dem Antrieb gekoppelte Eingangswelle und eine mit dem Maschinenträger oder mit der Tragstruktur gekoppelte Ausgangswelle. Das Getriebe ist vorzugsweise ein Untersetzungsgetriebe. Vorteilhaft ist die Ausgangswelle des Getriebes drehstarr mit der Eingangswelle des Getriebes gekoppelt. Insbesondere ist das Getriebe ein Zahnradgetriebe.

Bevorzugt greift die Gierbremse an einer Welle der Stelleinrichtung an, mittels welcher das Getriebe mit dem Antrieb gekoppelt oder koppelbar ist. Diese Welle ist z.B. durch die Eingangswelle des Getriebes gebildet oder drehstarr mit dieser verbunden.

Bevorzugt ist der Antrieb ein elektrischer Antrieb. Insbesondere ist oder umfasst der Antrieb eine oder wenigstens eine elektrische Maschine, beispielsweise einen oder wenigstens einen Elektromotor. Alternativ kann der Antrieb aber auch ein hydraulischer Antrieb oder ein anderer Antrieb sein.

Vorteilhaft ist eine elektrische Stromversorgung vorgesehen, die insbesondere eine Stromversorgung für den Antrieb bildet. Vorzugsweise ist der Antrieb mittels der Stromversorgung mit elektrischem Strom versorgbar. Dies gilt insbesondere dann, wenn der Antrieb ein elektrischer Antrieb, wie z.B. ein Elektromotor, ist. Handelt es sich bei dem Antrieb um einen anderen Antrieb, wie z.B. um einen hydraulischen Antrieb, so wird bevorzugt auch dieser, insbesondere mittelbar, durch die Stromversorgung versorgt. Beispielsweise umfasst der hydraulische Antrieb wenigstens eine elektrisch betriebene Hydraulikpumpe, die vorzugsweise mittels der Stromversorgung mit elektrischem Strom versorgt wird. Bevorzugt ist der Antrieb mittels der Stromversorgung unmittelbar oder mittelbar mit elektrischem Strom versorgbar. Insbesondere fällt bei einem Ausfall der Stromversorgung auch der Antrieb aus. Die Stromversorgung ist beispielsweise durch ein elektrisches Netz gegeben. Ferner kann die Stromversorgung eine Notstromversorgung umfassen. Der elektrische Strom kann ein Gleichstrom oder ein Wechselstrom, insbesondere ein Drehstrom sein. Das elektrische Netz ist bevorzugt ein Wechselstromnetz, vorzugsweise ein Drehstromnetz.

Eine Drehung oder Drehbewegung des Maschinenträgers relativ zu der Tragstruktur um die Gierachse ist bevorzugt mittels der Stelleinrichtung, insbesondere mittels des Antriebs, steuerbar oder regelbar. Vorteilhaft ist wenigstens eine Steuereinrichtung vorgesehen, mittels welcher der Antrieb steuerbar oder regelbar ist. Insbesondere ist der Antrieb, vorzugsweise mittels der Steuereinrichtung, derart steuerbar oder regelbar, dass eine Drehung oder Drehbewegung des Maschinenträgers relativ zu der Tragstruktur um die Gierachse erzeugbar und/oder bremsbar und/oder dämpfbar ist. Die Steuereinrichtung ist bevorzugt eine elektrische Steuereinrichtung und vorteilhaft elektrisch mit dem Antrieb verbunden. Insbesondere umfasst die Steuereinrichtung einen oder wenigstens einen Umrichter und/oder Frequenzumrichter. Vorzugsweise ist mittels der Steuereinrichtung der dem Antrieb zugeführte oder zuführbare Strom steuerbar oder regelbar. Bevorzugt ist mittels der Steuereinrichtung die Stromstärke und/oder Amplitude und/oder Frequenz und/oder Phase dieses Stroms steuerbar oder regelbar. Insbesondere ist die Steuereinrichtung mittels der Stromversorgung mit elektrischem Strom versorgbar.

An dem Maschinenträger ist bevorzugt ein durch Wind um eine Rotorachse drehbarer Rotor drehbar gelagert. Die Rotorachse ist vorzugsweise quer oder näherungsweise quer zur Gierachse ausgerichtet. Insbesondere ist die Rotorachse horizontal oder näherungsweise horizontal ausgerichtet. Bevorzugt ist die Rotorachse gegenüber der Horizontalen geringfügig geneigt. Vorteilhaft ist der Rotor an der Lee-Seite des Maschinenträgers angeordnet. Alternativ kann der Rotor aber auch an der Luv-Seite des Maschinenträgers angeordnet sein.

Der Rotor umfasst bevorzugt eine Rotornabe und ein oder mehrere an der Rotornabe gelagerte Rotorblätter, die sich insbesondere quer oder näherungsweise quer zur Rotorachse von der Rotornabe wegerstrecken. Vorzugsweise ist das oder jedes der Rotorblätter an der Rotornabe um eine Blattachse drehbar gelagert, die insbesondere quer oder näherungsweise quer zur Rotorachse verläuft. Die Anzahl der Rotorblätter beträgt bevorzugt eins, wenigstens eins, zwei, wenigstens zwei, drei oder wenigstens drei. Insbesondere sind die Rotorblätter rings der Rotorachse gleichmäßig verteilt angeordnet.

Der Maschinenträger trägt bevorzugt einen elektrischen Generator, der von dem Rotor antreibbar ist. Insbesondere ist der Generator mit einer Rotorwelle des Rotors verbunden. Zwischen den Generator und den Rotor und/oder zwischen den Generator und die Rotorwelle kann ein Rotorgetriebe geschaltet sein.

Die Tragstruktur umfasst oder bildet bevorzugt einen Turm, der insbesondere mit einem Fundament oder einer Gründung im Erdboden oder Seeboden verankert ist. Die Längsachse der Tragstruktur und/oder des Turms fällt bevorzugt mit der Gierachse zusammen. Insbesondere ist die Gierachse vertikal oder näherungsweise vertikal ausgerichtet. Der Maschinenträger ist vorzugsweise auf der Tragstruktur angeordnet.

Der Antrieb umfasst bevorzugt eine Antriebswelle, die insbesondere mittels des Antriebs drehbar ist. Ist oder umfasst der Antrieb einen Motor oder Elektromotor, so handelt es sich bei der Antriebswelle insbesondere um die Motorwelle des Motors oder Elektromotors oder z.B. um eine mit der Motorwelle des Motors oder Elektromotors drehstarr verbundene Welle. Ferner umfasst der Antrieb vorzugsweise einen Ständer und einen relativ zu diesem drehbaren Läufer, der insbesondere die Antriebswelle umfasst und/oder starr oder drehstarr mit dieser verbunden ist. Der Ständer umfasst bevorzugt wenigstens eine, vorzugsweise mehrere, elektrische Ständerwicklungen. Der Läufer umfasst bevorzugt wenigstens eine, vorzugsweise mehrere, elektrische Läuferwicklungen. Der Läufer kann auch als Käfigläufer ausgebildet sein, sodass die Läuferwicklung insbesondere mehrere Leiterstäbe umfasst, die an ihren Enden elektrisch miteinander verbunden, vorzugsweise kurzgeschlossen, sind. In diesem Fall bildet oder umfasst der Antrieb z.B. eine Asynchronmaschine. Der Antrieb kann auch als permanenterregter Elektromotor ausgebildet sein. In diesem Fall trägt der Läufer oder der Ständer wenigstens einen, vorzugsweise mehrere, Permanentmagnete, insbesondere anstelle der jeweiligen Wicklung oder Wicklungen. Bevorzugt ist der Antrieb somit ein Elektromotor, der beispielsweise als Gleichstrommotor oder als Wechselstrommotor, insbesondere als Drehstrommotor ausgebildet ist.

Der Ständer des Antriebs ist bevorzugt fest, insbesondere starr oder drehstarr, mit dem Maschinenträger oder mit der Tragstruktur verbunden. Vorzugsweise umfasst der Antrieb ein starr oder drehstarr mit dem Ständer verbundenes und/oder diesen umfassendes Antriebs- oder Motorgehäuse. Vorteilhaft ist das Antriebs- oder Motorgehäuse fest, insbesondere starr oder drehstarr, mit dem Maschinenträger oder mit der Tragstruktur verbunden.

Die Stelleinrichtung umfasst bevorzugt eine Ausgangswelle, die, insbesondere drehstarr, mit dem Maschinenträger oder mit der Tragstruktur verbunden oder gekoppelt ist. Vorteilhaft ist mit der Ausgangswelle ein Ritzel, insbesondere starr oder drehstarr oder elastisch, verbunden, welches mit einem Zahnkranz kämmt und/oder ineinander greift, der, vorzugsweise fest, insbesondere starr oder drehstarr oder verwindungsweich, mit dem Maschinenträger oder der Tragstruktur verbunden ist. Vorteilhaft ist die Ausgangswelle der Stelleinrichtung, vorzugsweise drehelastisch oder fest, insbesondere starr oder drehstarr, mit der Ausgangswelle des Getriebes verbunden oder durch diese gebildet.

Bevorzugt ist der Maschinenträger durch Wind relativ zu der Tragstruktur um die Gierachse drehbar. Vorteilhaft ist der Rotor dabei an der Lee-Seite des Maschinenträgers angeordnet. Insbesondere handelt es sich bei dem Giersystem um ein passives Giersystem.

Gemäß einer Ausgestaltung ist der Antrieb, vorzugsweise mittels der Steuereinrichtung, als Dämpfer betreibbar, mittels welchem eine, insbesondere durch Wind hervorgerufene, Drehung oder Drehbewegung des Maschinenträgers relativ zu der Tragstruktur um die Gierachse dämpfbar ist. Dieser Dämpfer bildet bevorzugt einen aktiven Dämpfer. Darunter ist insbesondere zu verstehen, dass dieser Dämpfer bei Ausfall der Stromversorgung nicht funktionsfähig ist und/oder dass die dämpfende Eigenschaft dieses Dämpfers und/oder die Dämpfung der oder einer Drehung oder Drehbewegung des Maschinenträgers relativ zu der Tragstruktur um die Gierachse mittels der Steuereinrichtung steuerbar ist.

Erfindungsgemäß ist ein Dämpfungsglied vorgesehen, mittels welchem oder mit Hilfe dessen eine, insbesondere durch Wind hervorgerufene, Drehbewegung des Maschinenträgers relativ zu der Tragstruktur um die Gierachse dämpfbar ist. Das Dämpfungsglied ist ein passives Dämpfungsglied. Darunter ist insbesondere zu verstehen, dass das Dämpfungsglied auch bei Ausfall der Stromversorgung funktionsfähig ist und/oder dass die dämpfende Eigenschaft des Dämpfungsglieds und/oder die Dämpfung der oder einer Drehbewegung des Maschinenträgers relativ zu der Tragstruktur um die Gierachse nicht aktiv steuerbar ist. Allerdings kann die Dämpfung abhängig von der Geschwindigkeit und/oder einer Geschwindigkeitsänderung der Drehbewegung des Maschinenträgers relativ zu der Tragstruktur um die Gierachse sein. Das Dämpfungsglied ist bevorzugt in den Triebstrang der Stelleinrichtung geschaltet. Insbesondere umfasst die Stelleinrichtung das Dämpfungsglied. Vorteilhaft umfasst das Dämpfungsglied eine Eingangswelle und eine Ausgangswelle.

Bevorzugt bildet oder umfasst das Dämpfungsglied einen hydraulischen Dämpfer. Bei dem hydraulischen Dämpfer handelt es sich z.B. um eine hydrodynamische Kupplung oder Visko-Kupplung. Vorteilhaft umfasst das Dämpfungsglied einen Impeller mit einem Impellergehäuse und einem in diesem drehbaren Innenteil, welches vorzugsweise fest, insbesondere starr oder drehstarr, mit einer der Wellen des Dämpfungsglieds, beispielsweise mit der Ausgangswelle des Dämpfungsglieds, verbunden ist. Das Impellergehäuse ist vorzugsweise fest, insbesondere starr oder drehstarr, mit einer anderen der Wellen des Dämpfungsglieds, beispielsweise mit der Eingangswelle des Dämpfungsglieds, verbunden. Alternativ ist das Innenteil z.B. fest, insbesondere starr oder drehstarr, mit der Eingangswelle des Dämpfungsglieds, verbunden, wobei das Impellergehäuse z.B. fest, insbesondere starr oder drehstarr, mit der Ausgangswelle des Dämpfungsglieds verbunden ist. Das Innenteil ist z.B. ein Propeller. Vorteilhaft ist in dem Gehäuse eine Flüssigkeit, insbesondere eine Hydraulikflüssigkeit vorgesehen. Das Dämpfungsglied ist bevorzugt zwischen den Antrieb und das Getriebe geschaltet.

Erfindungsgemäß greift die Gierbremse zwischen dem Dämpfungsglied und dem Getriebe am Triebstrang der Stelleinrichtung an. Somit kann vermieden werden, dass das Dämpfungsglied trotz betätigter Gierbremse eine Drehung des Maschinenträgers relativ zu der Tragstruktur um die Gierachse zulässt.

Bevorzugt greift die Gierbremse an einer Welle der Stelleinrichtung an, mittels welcher das Getriebe mit dem Dämpfungsglied gekoppelt oder koppelbar ist. Die Welle, an welcher die Gierbremse angreift, ist z.B. durch die Eingangswelle des Getriebes gebildet oder drehstarr mit dieser verbunden, und/oder die Welle, an welcher die Gierbremse angreift, ist z.B. durch die Ausgangswelle des Dämpfungsglieds gebildet oder drehstarr mit dieser verbunden. Insbesondere ist die Welle, an welcher die Gierbremse angreift, zwischen der Ausgangswelle des Dämpfungsglieds und der Eingangswelle des Getriebes angeordnet und/oder zwischen die Ausgangswelle des Dämpfungsglieds und die Eingangswelle des Getriebes geschaltet. In diesem Fall ist die Welle, an welcher die Gierbremse angreift, insbesondere drehstarr mit der Ausgangswelle des Dämpfungsglieds und drehstarr mit der Eingangswelle des Getriebes verbunden.

Mittels der Gierbremse ist bevorzugt der Triebstrang der Stelleinrichtung und/oder ein Teil dieses Triebstrangs blockierbar. Der Triebstrang und/oder der mittels der Gierbremse blockierbare Teil des Triebstrangs umfasst insbesondere das Getriebe. Beispielsweise ist mittels der Gierbremse das Getriebe, insbesondere von seiner Eingangsseite her, blockierbar. Vorteilhaft ist mittels der Gierbremse die Welle, an welcher die Gierbremse angreift, bremsbar und/oder blockierbar.

Die Gierbremse ist bevorzugt eine Scheibenbremse. Bevorzugt umfasst die Gierbremse wenigstens eine Bremsscheibe und wenigstens einen Bremskörper, der gegen die Bremsscheibe drückbar ist. Der Bremskörper umfasst z.B. einen oder wenigstens einen Bremsklotz und/oder einen oder wenigstens einen Bremssattel und/oder einen oder wenigstens einen Bremskolben und/oder einen oder wenigstens einen Bremsbelag. Insbesondere ist die Bremsscheibe drehstarr mit dem Triebstrang und/oder mit dem mittels der Gierbremse blockierbaren Teil des Triebstrangs verbunden. Bevorzugt ist die Bremsscheibe drehstarr mit der Welle, an welcher die Gierbremse angreift, verbunden.

Bevorzugt ist eine Bremseinrichtung vorgesehen, welche die Gierbremse und die oder eine Welle aufweist, an welcher die Gierbremse angreift. Die Bremseinrichtung ist bevorzugt, insbesondere mit ihrer Welle, zwischen den Antrieb und das Getriebe, vorzugsweise zwischen das Dämpfungsglied und das Getriebe, geschaltet.

Gemäß einer Ausgestaltung bildet die Gierbremse im betätigten Zustand eine Rutschkupplung, die bei Erreichen oder Überschreiten eines Losbrechmoments eine Drehung des Maschinenträgers relativ zu der Tragstruktur um die Gierachse zulässt. Somit lassen sich Überlastungen vermeiden, die zu einer Beschädigung des Maschinenträgers und/oder der Tragstruktur und/oder anderer Komponenten der Windkraftanlage führen können.

Erfindungsgemäß ist eine Antriebsbremse vorgesehen, mittels welcher der Antrieb bremsbar und/oder blockierbar ist. Bevorzugt ist die Antriebsbremse mit der Antriebswelle, insbesondere fest, vorzugsweise starr oder drehstarr, verbunden. Die Antriebsbremse ist insbesondere in Kombination mit dem Dämpfungsglied sinnvoll, sodass bei gebremstem oder blockiertem Antrieb eine Dämpfung einer, insbesondere durch Wind hervorgerufenen, Drehbewegung des Maschinenträgers relativ zu der Tragstruktur um die Gierachse möglich ist. Vorteilhaft ist bei Ausfall der Stromversorgung der Antrieb mittels der Antriebsbremse, insbesondere automatisch, bremsbar und/oder blockierbar. Die Antriebsbremse ist bevorzugt in den bremsenden und/oder blockierenden Zustand vorgespannt, insbesondere durch wenigstens eine Feder. Vorteilhaft ist die Antriebsbremse durch wenigstens einen Elektromagneten in den gelösten Zustand überführbar, insbesondere gegen die Kraft der Feder. Der Elektromagnet ist dazu bevorzugt mit elektrischem Strom versorgbar, der insbesondere von der Stromversorgung zur Verfügung stellbar ist. Der Antrieb ist vorzugsweise zwischen die Antriebsbreme und das Dämpfungsglied geschaltet. Handelt es sich bei dem Antrieb um einen Motor oder Elektromotor, kann die Antriebsbremse auch als Motorbremse bezeichnet werden.

Gemäß einer Ausgestaltung ist mit dem Antrieb die oder eine Steuereinrichtung verbunden, insbesondere elektrisch verbunden, mittels welcher der Antrieb, insbesondere bei vorhandener Stromversorgung, steuerbar oder regelbar ist. Vorteilhaft ist die oder eine, insbesondere durch Wind hervorgerufene, Drehung oder Drehbewegung des Maschinenträgers relativ zu der Tragstruktur um die Gierachse durch den Antrieb dämpfbar. Wie oben bereits angesprochen, wird der Antrieb somit insbesondere nicht zum Drehen des Maschinenträgers, sondern vorzugsweise zum Dämpfen der oder einer, insbesondere durch Wind hervorgerufenen, Drehung oder Drehbewegung des Maschinenträgers relativ zu der Tragstruktur um die Gierachse eingesetzt. Dies ist insbesondere dann sinnvoll, wenn der Rotor auf der Lee-Seite des Maschinenträgers angeordnet ist. In diesem Fall ist der Maschinenträger durch den Wind in eine Stellung drehbar, in welcher die Rotorachse parallel oder näherungsweise parallel zur Windrichtung ausgerichtet ist. Dies funktioniert im Prinzip wie bei einer Windfahne. Die erfindungsgemäße Steuervorrichtung bildet in diesem Sinne bevorzugt eine Dämpfungsvorrichtung. Da es aufgrund von Turbulenzen, Windböen, Windscherung etc. zu einer ungewollten Drehbewegung des Maschinenträges kommen kann, welche diesen aus der gewünschten Position herausdreht, ist eine solche Drehbewegung mittels des Antriebs durch Aufbau eines Gegenmoments dämpfbar. Im Falle eines Stromausfalls und/oder bei gebremsten und/oder blockiertem Antrieb übernimmt diese Dämpfungsfunktion insbesondere das Dämpfungsglied. Bevorzugt ist es auch möglich, den Maschinenträger aktiv mittels des Antriebs zu drehen. Die erfindungsgemäße Steuervorrichtung bildet in diesem Sinne insbesondere eine Antriebsvorrichtung. Dies ist z.B. bei Korrekturen eines größeren Gierfehlers oder zu Wartungszwecken sinnvoll, beispielsweise um eine Verdrehung von zwischen dem Maschinenträger und der Tragstruktur verlaufenen Leitungen rückgängig zu machen. Ferner ist ein aktives Drehen des Maschinenträgers dann sinnvoll, wenn der Rotor auf der Luv-Seite des Maschinenträgers angeordnet ist. Bevorzugt bildet die erfindungsgemäße Steuervorrichtung eine Dämpfungs- und/oder Antriebsvorrichtung.

Der Triebstrang der Stelleinrichtung umfasst insbesondere alle Komponenten der Stelleinrichtung, mit welchen eine Bewegung, vorzugsweise eine Drehbewegung, zwischen dem Antrieb und der Ausgangsseite des Getriebes und/oder der Ausgangswelle des Getriebes und/oder der Ausgangswelle der Stelleinrichtung übertragbar ist oder übertragen wird. Bevorzugt umfasst der Triebstrang das Getriebe und/oder die Eingangswelle des Getriebes und/oder die Ausgangswelle des Getriebes und/oder die Antriebswelle und/oder die Ausgangswelle der Stelleinrichtung und/oder das Dämpfungsglied und/oder die Eingangswelle des Dämpfungsglieds und/oder die Ausgangswelle des Dämpfungsglieds und/oder den Impeller.

Die Erfindung betrifft ferner eine Windkraftanlage mit einer Tragstruktur, einem an der Tragstruktur um eine Gierachse drehbar gelagerten Maschinenträger und wenigstens einer Steuervorrichtung, die wenigstens eine zwischen die Tragstruktur und den Maschinenträger geschaltete und einen Antrieb und ein, insbesondere mit diesem gekoppeltes, Getriebe umfassende Stelleinrichtung und wenigstens eine Gierbremse aufweist, mittels welcher der Maschinenträger, insbesondere unverdrehbar, an der Tragstruktur festlegbar ist, wobei die Gierbremse zwischen dem Antrieb und dem Getriebe am Triebstrang der Stelleinrichtung angreift. Bei der Steuervorrichtung handelt es sich insbesondere um erfindungsgemäße Steuervorrichtungen, die gemäß allen in diesem Zusammenhang erläuterten Ausgestaltungen weitergebildet sein kann. Die Windkraftanlage kann ein Luv-Läufer oder ein Lee-Läufer sein. Bevorzugt handelt es sich bei der Windkraftanlage aber um einen Lee-Läufer.

Die Erfindung wird nachfolgend anhand einer bevorzugten Ausführungsform unter Bezugnahme auf die Zeichnung beschrieben. In der Zeichnung zeigen:
Fig. 1 eine schematische Seitenansicht einer Windkraftanlage,
Fig. 2 eine schematische Seitenansicht eines Maschinenträgers der Windkraftanlage nach Fig. 1 mit zwei Steuervorrichtungen gemäß einer Ausführungsform,
Fig. 3 eine der Steuervorrichtungen nach Fig. 2 in perspektivischer Ansicht,
Fig. 4 die Steuervorrichtung nach Fig. 3 in Seitenansicht,
Fig. 5 eine schematische Schnittansicht der Steuervorrichtung entlang der aus Fig. 4 ersichtlichen Schnittlinie A-A und
Fig. 6 eine schematische Schnittansicht der aus Fig. 5 ersichtlichen Bremseinrichtung.

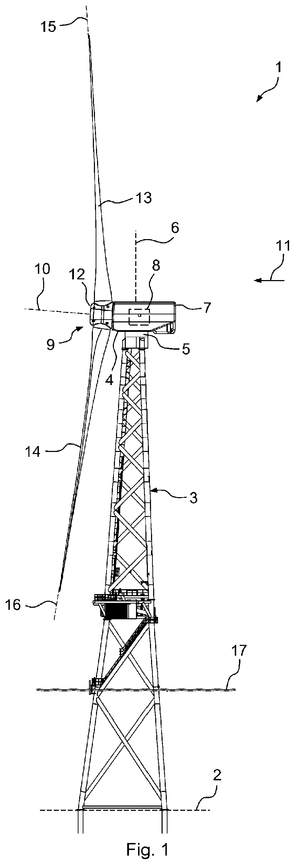

Aus Fig. 1 ist eine schematische Seitenansicht einer Windkraftanlage 1 ersichtlich, die im Meer angeordnet und im Meeresboden 2 verankert ist. Der Wasserspiegel des Meeres ist schematisch angedeutet und mit dem Bezugszeichen 17 gekennzeichnet. Die Windkraftanlage 1 umfasst eine Tragstruktur 3 in Form eines Gitterturms, auf der ein Maschinenträger 4 über ein Azimutlager 5 um eine vertikale Gierachse 6 drehbar gelagert ist. Der Maschinenträger 4 trägt ein Maschinenhaus 7, in dem ein elektrischer Generator 8 angeordnet ist. An dem Maschinenträger 4 ist ein Rotor 9 um eine Rotorachse 10 drehbar gelagert, die quer oder näherungsweise quer zur Gierachse 6 verläuft. Vorzugsweise ist die Rotorachse 10 aber geringfügig gegenüber der Horizontalen geneigt. Der Rotor 9 umfasst eine Rotornabe 12, an der zwei Rotorblätter 13 und 14 um ihre jeweilige Blattachse 15 bzw. 16 drehbar gelagert sind, wobei die Blattachsen 15 und 16 quer oder näherungsweise quer zur Rotorachse 10 verlaufen. Die Rotornabe 12 ist drehstarr mit einer Rotorwelle (nicht gezeigt) verbunden, mittels welcher der Rotor 9 mit dem Generator 8 verbunden ist. Der Rotor 9 wird durch Wind 11 um seine Rotorachse 10 gedreht und treibt den Generator 8 an.

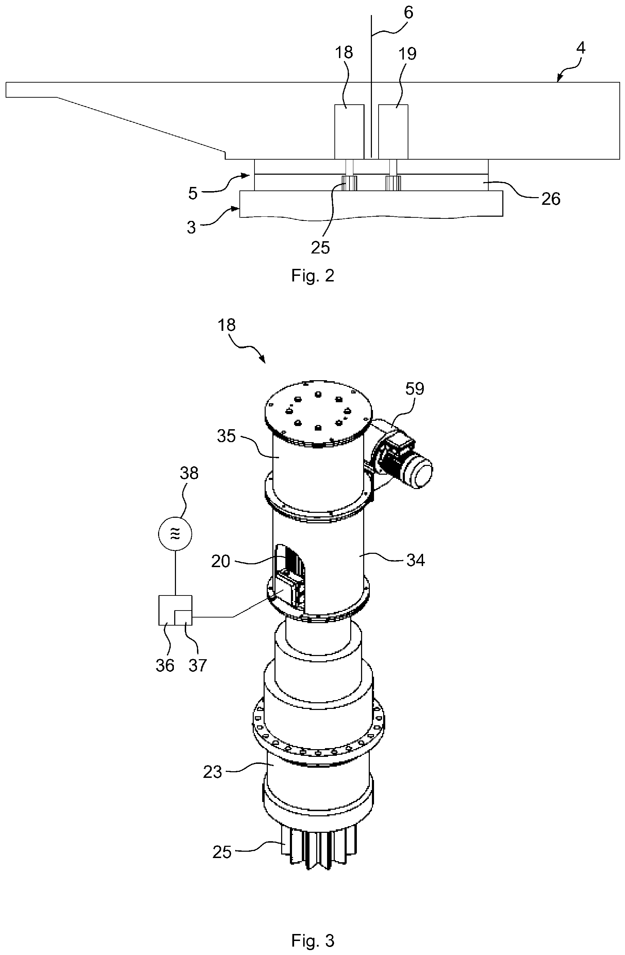

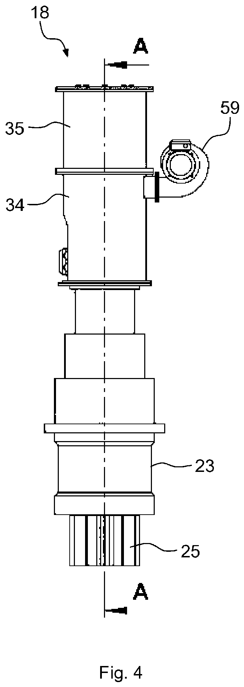

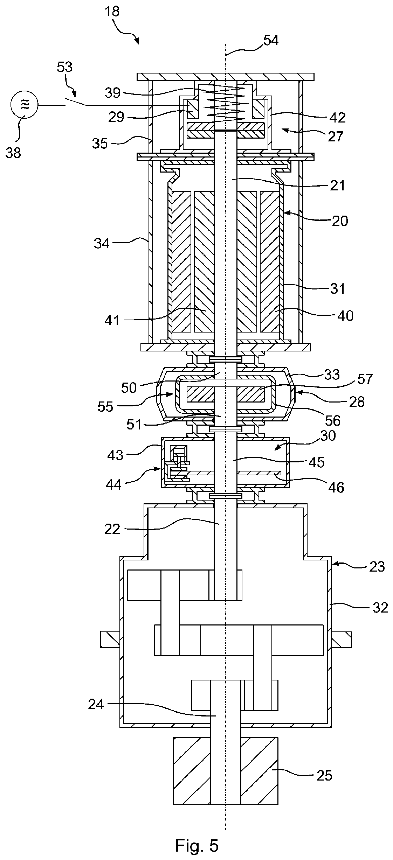

Aus Fig. 2 ist eine schematische Seitenansicht des Maschinenträgers 4 ersichtlich, an dem zwei Steuervorrichtungen 18 und 19 gemäß einer Ausführungsform der Erfindung befestigt sind. Die Steuervorrichtungen 18 und 19 sind gleichartig aufgebaut, wobei eine perspektivische Ansicht der Steuervorrichtung 18 aus Fig. 3 ersichtlich ist. Ferner ist eine Seitenansicht der Steuervorrichtung 18 aus Fig. 4 und eine schematische Schnittansicht der Steuervorrichtung 18 entlang der in Fig. 4 dargestellten Schnittlinie A-A aus Fig. 5 ersichtlich.

Die Steuervorrichtung 18 umfasst einen Elektromotor 20, dessen Motorwelle 21 um eine Achse 54 drehbar und unter Zwischenschaltung eines Dämpfungsglieds in Form eines hydraulischen Dämpfers 28 und einer Bremseinrichtung 44 mit einer Eingangswelle 22 eines Getriebes 23 verbunden ist. Eine Ausgangswelle 24 des Getriebes 23 ist drehstarr mit einem Ritzel 25 verbunden, beispielsweise direkt oder unter Zwischenschaltung eines Kupplungsglieds. Alternativ kann die Ausgangswelle 24, insbesondere unter Zwischenschaltung eines Kupplungsglieds, auch drehweich mit dem Ritzel 25 verbunden sein. Das Ritzel 25 kämmt mit einem Zahnkranz 26 (siehe Fig. 2), der starr mit der Tragstruktur 3 verbunden und im oberen Endbereich der Tragstruktur 3 vorgesehen ist. Die Motorwelle 21 ist mit ihrem dem Dämpfer 28 abgewandten Ende mit einer Motorbremse 27 verbunden, die wenigstens einen Elektromagnet 29 umfasst, mittels welchem die Bremse 27 gegen die Kraft einer Feder 39 im gelösten Zustand gehalten wird, solange ein ausreichend großer elektrischer Strom durch den Elektromagneten 29 fließt. Bei Ausfall des Stroms nimmt die Bremse 27 automatisch ihren aus Fig. 5 ersichtlichen bremsenden Zustand an und blockiert die Motorwelle 21 des Elektromotors 20. Der Elektromotor 20 umfasst ein Motorgehäuse 31, welches einen Ständer des Elektromotors 20 bildet und elektrische Ständerwicklungen 40 umfasst. Ferner umfasst die Motorwelle 21 elektrische Läuferwicklungen 41 und bildet einen Läufer des Elektromotors 20. Ferner umfasst das Getriebe 23 ein Getriebegehäuse 32, der Dämpfer 28 umfasst ein Dämpfergehäuse 33, die Bremse 27 umfasst ein Bremsengehäuse 42 und die Bremseinrichtung 44 umfasst ein Gehäuse 43. Gemäß der Ausführungsform ist der Elektromotor 20 ferner in einem ersten Außengehäuse 34 angeordnet, wobei die Bremse 27 in einem zweiten Außengehäuse 35 angeordnet ist. An dem ersten Außengehäuse 34 ist ein Lüfter 59 vorgesehen, mittels welchem der Elektromotor 20 gekühlt wird. Alternativ können die Außengehäuse 34 und 35 aber auch durch ein gemeinsames Außengehäuse gebildet sein oder entfallen. Bilden die Außengehäuse 34 und 35 ein gemeinsames Außengehäuse, so wird dieses insbesondere mit einem Lüfter belüftet. Ferner kann das Gehäuse 34 auch den Dämpfer 28 und ggf. die Bremseinrichtung 44 umfassen. Die Gehäuse 31, 32, 33, 34, 35, 42 und 43 sind starr miteinander verbunden. Ferner sind diese Gehäuse starr mit dem Maschinenträger 4 verbunden.

Der Elektromotor 20 ist über eine Steuereinrichtung 36, die einen Frequenzumrichter 37 umfasst, mit einem elektrischen Netz 38 verbunden. Das elektrische Netz 38 bildet eine Stromversorgung für die Steuereinrichtung 36 und den Elektromotor 20. Ferner ist oder wird der Elektromagnet 29 aus dem elektrischen Netz 38 mit Strom versorgbar bzw. versorgt.

Ändert der Wind 11 seine Richtung, folgt der Maschinenträger 4 dieser Richtungsänderung und dreht sich um die Gierachse 6. Da die Windkraftanlage 1 als Lee-Läufer ausgebildet ist, verhält sich der Maschinenträger 4 näherungsweise wie eine Windfahne. Insbesondere versucht sich der Maschinenträger 4 so auszurichten, dass die Rotorachse 10 in Windrichtung 11 ausgerichtet ist. Während dieser Drehung, die auch als Gieren bezeichnet wird, wird das Ritzel 25 gedreht, welches unter Zwischenschaltung des Getriebes 23, der Bremseinrichtung 44 und des Dämpfers 28 die Motorwelle 21 dreht. Der Elektromotor 20 wird mittels der Steuereinrichtung 36 derart angesteuert, dass diese Drehbewegung gedämpft wird. Dies ist von Vorteil, da abrupte Windrichtungsänderungen zu starken Belastungen der Windkraftanlage 1 führen können. Ferner ist durch das Dämpfen ein Überschwingen des Maschinenträgers 4 vermeidbar oder zumindest reduzierbar. Die Steuereinrichtung 36 passt die Dämpfung dabei derart an, dass die Belastung der Windkraftanlage 1 möglichst gering gehalten wird. Der Elektromotor 20, das Getriebe 23 und die Steuereinrichtung 36 bilden zusammen eine Stelleinrichtung. Ferner können der Dämpfer 28 und/oder die Bremseinrichtung 44 der Stelleinrichtung zugerechnet werden.

Fällt das Netz 38 aus, so ist eine gesteuerte Dämpfung der Gierbewegung des Maschinenträgers 4 nicht mehr durch die Steuereinrichtung 36 im Zusammenwirken mit dem Elektromotor 20 erzielbar. Da aber auch der Elektromagnet 29 durch das Netz 38 versorgt wird, fällt bei einem Ausfall des Netzes 38 auch der Elektromagnet 29 aus, sodass die Motorwelle 21 automatisch durch die Bremse 27 blockiert wird. Eine Dämpfung einer insbesondere durch Wind hervorgerufenen Gierbewegung des Maschinenträgers 4 ist aber auch bei blockierter Motorwelle 21 noch durch den Dämpfer 28 sichergestellt. Zwar ist der Dämpfer 28 ein passiver Dämpfer, sodass die durch ihn bewirkte Dämpfung nicht immer optimal eingestellt werden kann, gleichwohl ist es mit dem Dämpfer 28 möglich, zu starke Belastungen der Windkraftanlage 1 und ein zu starkes Überschwingen des Maschinenträges 4 in weiten Bereichen zu vermeiden.

Ist das Netz 38 wieder vorhanden, wird der Elektromagnet 29 bestromt und gibt die Motorwelle 21 wieder frei. Ferner nimmt die Steuereinrichtung 36 wieder ihren Betrieb auf und steuert die Dämpfung der Gierbewegungen des Maschinenträgers 4.

Es ist aber auch bei vorhandener Stromversorgung 38 ein Blockieren der Motorwelle 21 mittels der Bremse 27 möglich, insbesondere indem der Elektromagnet 29 nicht mehr in ausreichendem Maße bestromt wird. Beispielsweise kann der Elektromagnet 29 hierzu durch einen schematisch dargestellten Schalter 53 von der Stromversorgung 38 getrennt werden. In diesem Fall wird der Elektromotor 20 bevorzugt nicht durch die Steuereinrichtung 36 angesteuert. Ein Blockieren der Motorwelle 21 bei vorhandener Stromversorgung ist z.B. dann sinnvoll, wenn der Maschinenträger 4 in einer bestimmten Stellung relativ zu der Tragstruktur 3 verharren soll. Eine Dämpfung einer insbesondere durch Wind hervorgerufenen Gierbewegung des Maschinenträgers 4 kann dann durch den Dämpfer 28 sichergestellt werden.

Wegen des Dämpfers 28 sind bei blockierter Motorwelle 21 aber noch Bewegungen des Maschinenträgers 4 um die Gierachse 6 möglich. In einigen Fällen kann es jedoch sinnvoll sein, auch diese Bewegungen zu unterbinden. Zu diesem Zweck ist die Bremseinrichtung 44 vorgesehen, mittels welcher der Maschinenträger 4, insbesondere unverdrehbar, an der Tragstruktur 3 festlegbar ist. Die Bremseinrichtung 44 umfasst eine Gierbremse 30 und eine Welle 45, an welcher die Gierbremse 30 angreift. Die Welle 45 ist zwischen eine Ausgangswelle 51 des Dämpfers 28 und die Eingangswelle 22 des Getriebes 23 geschaltet und sowohl mit der Ausgangswelle 51 des Dämpfers 28 als auch mit der Eingangswelle 22 des Getriebes 23 drehstarr verbunden. Es ist aber auch möglich, dass die Welle 45 durch die Ausgangswelle 51 des Dämpfers 28 oder durch die Eingangswelle 22 des Getriebes 23 gebildet ist. Insbesondere ist es möglich, dass die Welle 45 und die Ausgangswelle 51 des Dämpfers 28 durch die Eingangswelle 22 des Getriebes 23 gebildet sind. Ferner ist eine Eingangswelle 50 des Dämpfers 28 drehstarr mit der Motorwelle 21 verbunden.

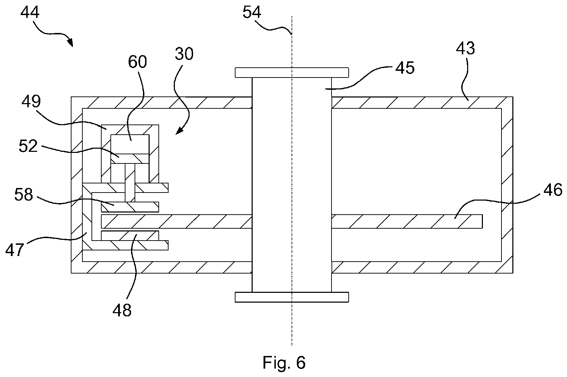

Eine vergrößerte Darstellung der Bremseinrichtung 44 ist aus Fig. 6 ersichtlich. Die Gierbremse 30 umfasst eine drehstarr mit der Welle 45 verbundene Bremsscheibe 46, einen am Gehäuse 43 bewegbar gelagerten Bremssattel 47 mit einem ersten Bremsbelag 48, und einen hydraulischen Bremszylinder 49 mit Bremskolben 52, an dem ein zweiter Bremsbelag 58 befestigt ist. Der Bremszylinder 49 umfasst eine Kammer 60, in welche zum Betätigen der Gierbremse 30 Hydraulikflüssigkeit unter Druck eingebracht wird, sodass sich der Bremskolben 52 bewegt und den Bremsbelag 58 gegen eine Seite der Bremsscheibe 46 drückt. Dadurch wird auch der Bremssattel 47 bewegt und drückt den Bremsbelag 48 gegen die andere Seite der Bremsscheibe 46. Die Gierbremse 30 ist hier als hydraulisch betätigte Schwimmsattelbremse ausgebildet, deren Bremsträger durch das Gehäuse 43 gebildet ist. Alternativ kann die Gierbremse aber auch elektrisch oder pneumatisch betätigt werden. Ferner kann die Gierbremse als Festsattelbremse ausgebildet sein. Auch ist es möglich, dass die Gierbremse mehrere Bremsscheiben umfasst.

Der Dämpfer 28 umfasst einen Impeller 55 mit einem drehstarr mit der Eingangswelle 50 des Dämpfers 28 verbundenen Impellergehäuse 56 und einem in diesem drehbaren Innenteil 57, welches drehstarr mit der Ausgangswelle 51 des Dämpfers 28 verbunden ist. Ferner ist in das Impellergehäuse 56 eine Hydraulikflüssigkeit eingebracht. Bevorzugt umfasst der Dämpfer 28 ferner eine Bremse, mittels welcher das Impellergehäuse 56 bei Ausfall der Stromversorgung 38 automatisch blockierbar ist. Somit ist es möglich, die Dämpfungsfunktion des Dämpfers bei Ausfall der Stromversorgung 38 automatisch zu aktivieren. Die Bremse des Dämpfers 38 kann alternativ oder ergänzend zu der Bremse 27 vorgesehen sein.

Insbesondere sind wenigstens die beiden Steuervorrichtungen 18 und 19 vorhanden. Vorteilhaft sind aber auch noch zusätzliche Steuervorrichtungen vorhanden, sodass eine stärkere Dämpfung oder Bremskraft aufgebracht werden kann. Bevorzugt sind die Steuereinrichtungen 36 aller Steuervorrichtungen miteinander vernetzt, sodass, wenn eine stärkere Dämpfung oder Bremskraft erforderlich ist, zusätzliche Steuervorrichtungen zugeschaltet werden können. Ist eine schwächere Dämpfung oder Bremskraft ausreichend, die beispielsweise mit lediglich einer oder zwei Steuervorrichtungen aufgebracht werden kann, können die zusätzlichen Steuervorrichtungen wieder deaktiviert werden.

### Bezugszeichenliste

1 Windkraftanlage
2 Meeresboden
3 Tragstruktur
4 Maschinenträger
5 Azimutlager
6 Gierachse
7 Maschinenhaus
8 elektrischer Generator
9 Rotor
10 Rotorachse
11 Wind
12 Rotornabe
13 Rotorblatt
14 Rotorblatt
15 Blattachse
16 Blattachse
17 Wasserspiegel
18 Steuervorrichtung
19 Steuervorrichtung
20 Elektromotor
21 Motorwelle
22 Eingangswelle des Getriebes
23 Getriebe
24 Ausgangswelle des Getriebes
25 Ritzel
26 Zahnkranz
27 Motorbremse
28 Dämpfer
29 Elektromagnet
30 Gierbremse
31 Motorgehäuse
32 Getriebegehäuse
33 Dämpfergehäuse
34 erstes Außengehäuse
35 zweites Außengehäsue
36 Steuereinrichtung
37 Frequenzumrichter
38 elektrisches Netz / Stromversorgung
39 Feder der Motorbremse
40 Ständerwicklung
41 Läuferwicklung
42 Bremsengehäuse
43 Gehäuse der Bremseinrichtung
44 Bremseinrichtung
45 Welle der Bremseinrichtung
46 Bremsscheibe
47 Bremssattel
48 erster Bremsbelag
49 Bremszylinder
50 Eingangswelle des Dämpfers
51 Ausgangswelle des Dämpfers
52 Bremskolben
53 elektrischer Schalter
54 Achse
55 Impeller des Dämpfers
56 Impellergehäuse des Dämpfers
57 Innenteil des Dämpfers
58 zweiter Bremsbelag
59 Lüfter
60 Kammer des Bremszylinders

## Patentansprüche

1. Steuervorrichtung für ein Giersystem einer Windkraftanlage, mit wenigstens einer zwischen eine Tragstruktur (3) und einen an der Tragsstruktur (3) um eine Gierachse (6) drehbar gelagerten Maschinenträger (4) geschalteten und einen Antrieb (20) und ein Getriebe (23) umfassenden Stelleinrichtung und wenigstens einer Gierbremse (30), mittels welcher der Maschinenträger (4) an der Tragstruktur (3) festlegbar ist, wobei die Gierbremse (30) zwischen dem Antrieb (20) und dem Getriebe (23) am Triebstrang der Stelleinrichtung angreift, **gekennzeichnet durch** eine Antriebsbremse (27), mittels welcher der Antrieb (20) blockierbar ist, wobei zwischen den Antrieb (20) und das Getriebe (23) ein passives Dämpfungsglied (28) geschaltet ist, mittels welchem eine Drehbewegung des Maschinenträgers (4) relativ zu der Tragstruktur (3) um die Gierachse (6) dämpfbar ist, wobei die Gierbremse (30) zwischen dem Dämpfungsglied (28) und dem Getriebe (23) am Triebstrang der Stelleinrichtung angreift.

2. Steuervorrichtung nach Anspruch 1, **dadurch gekennzeichnet, dass** mittels der Gierbremse (30) der Triebstrang oder ein das Getriebe (23) umfassender Teil dieses Triebstrangs blockierbar ist.

3. Steuervorrichtung nach Anspruch 1 oder 2, **dadurch gekennzeichnet, dass** die Gierbremse (30) an einer Welle angreift, mittels welcher das Getriebe (23) mit dem den Antrieb (20) gekoppelt ist.

4. Steuervorrichtung nach einem der vorangehenden Ansprüche, **dadurch gekennzeichnet, dass** das passive Dämpfungsglied (28) eine hydrodynamische Kupplung oder Visco-Kupplung ist.

5. Steuervorrichtung nach einem der vorangehenden Ansprüche, **dadurch gekennzeichnet, dass** die Gierbremse (30) an einer Welle (45) angreift, mittels welcher das Getriebe (23) mit dem Dämpfungsglied (28) gekoppelt ist.

6. Steuervorrichtung nach Anspruch 3 oder 5, **dadurch gekennzeichnet, dass** mittels der Gierbremse (30) die Welle (45) blockierbar ist.

7. Steuervorrichtung nach Anspruch 3 oder 5 oder nach Anspruch 6, **dadurch gekennzeichnet, dass** die Gierbremse (30) wenigstens eine mit der Welle (45) drehstarr verbundene Bremsscheibe (46) und wenigstens einen Bremskörper (58) umfasst, der gegen die Bremsscheibe (46) drückbar ist.

8. Steuervorrichtung nach einem der vorangehenden Ansprüche **dadurch gekennzeichnet, dass** die Gierbremse (30) im betätigten Zustand eine Rutschkupplung bildet, die bei Erreichen oder Überschreiten eines Losbrechmoments eine Drehung des Maschinenträgers (4) relativ zu der Tragstruktur um die Gierachse (6) zulässt.

9. Steuervorrichtung nach einem der vorangehenden Ansprüche, **dadurch gekennzeichnet, dass** bei Ausfall der oder einer elektrischen Stromversorgung des Antriebs (20) der Antrieb (20) mittels der Antriebsbremse (27) automatisch blockierbar ist.

10. Windkraftanlage mit einer Tragstruktur (3), einem an der Tragstruktur (3) um eine Gierachse (6) drehbar gelagerten Maschinenträger (4) und wenigstens einer Steuervorrichtung (18) nach einem der vorangehenden Ansprüche, **dadurch gekennzeichnet, dass** die Windkraftanlage (1) ein Lee-Läufer ist.

## Claims

1. Control device for a yaw system of a wind turbine, with at least one actuating device comprising a drive (20) and a gear mechanism (23) and connected between a supporting structure (3) and a machine support (4) mounted on the supporting structure (3) so that it can rotate about a yaw axis (6), and at least one yaw brake (30), by means of which the machine support (4) can be fixed on the supporting structure (3), wherein the yaw brake (30) acts on the drive train of the actuating device between the drive (20) and the gear mechanism (23), **characterised by** a drive brake (27) by means of which the drive (20) can be blocked, wherein a passive damping member (28) is arranged between the drive (20) and the gear mechanism (23), by means of which a rotational movement of the machine support (4) relative to the supporting structure (3) about the yaw axis (6) can be damped, wherein the yaw brake (30) acts on the drive train of the actuating device between the damping member (28) and the gear mechanism (23).

2. Control device according to Claim 1, **characterised in that** the drive train or a part of this drive train comprising the gear mechanism (23) can be blocked by means of the yaw brake (30).

3. Control device according to Claim 1 or 2, **characterised in that** the yaw brake (30) acts on a shaft, by means of which the gear mechanism (23) is coupled to the drive (20).

4. Control device according to any one of the preceding claims, **characterised in that** the passive damping member (28) is a hydrodynamic coupling or visco-coupling.

5. Control device according to any one of the preceding claims, **characterised in that** the yaw brake (30) acts on a shaft (45), by means of which the gear mechanism (23) is coupled to the damping member (28).

6. Control device according to Claim 3 or 5, **characterised in that** the shaft (45) can be blocked by means of the yaw brake (30).

7. Control device according to Claim 3 or 5 or according to Claim 6, **characterised in that** the yaw brake (30) comprises at least one brake disc (46) connected in a torque-proof manner to the shaft (45) and at least one brake body (58), which can be pressed against the brake disc (46).

8. Control device according to any one of the preceding claims, **characterised in that** the yaw brake (30) in the actuated state forms a slip clutch, which when a breakaway torque is reached or exceeded allows a rotation of the machine support (4) relative to the supporting structure about the yaw axis (6).

9. Control device according to any one of the preceding claims, **characterised in that** in the event of an outage of the or of an electrical power supply of the drive (20), the drive (20) can be automatically blocked by means of the drive brake (27).

10. Wind turbine with a supporting structure (3), a machine support (4) rotatably mounted on the supporting structure (3) about a yaw axis (6) and at least one control device (18) according to any one of the preceding claims, **characterised in that** the wind turbine (1) is a leeward rotor.

## Revendications

1. Dispositif de commande pour un système de lacet d'une éolienne, avec au moins un dispositif de réglage branché entre une structure porteuse (3) et un support de machine (4) logé de manière rotative autour d'un axe de lacet (6) sur la structure porteuse (3) et comprenant un dispositif d'entraînement (20) et un engrenage (23) et au moins un frein de lacet (30) permettant de fixer le support de machine (4) à la structure porteuse (3), le frein de lacet (30) agissant entre le dispositif d'entraînement (20) et l'engrenage (23) sur la chaîne d'entraînement du dispositif de réglage, **caractérisé par** un frein d'entraînement (27) permettant de bloquer le dispositif d'entraînement (20), un organe d'amortissement passif (28) étant branché entre le dispositif d'entraînement (20) et l'engrenage (23), qui permet d'amortir un mouvement de rotation du support de machine (4) par rapport à la structure porteuse (3) autour de l'axe de lacet (6), le frein de lacet (30) agissant entre l'organe d'amortissement (28) et l'engrenage (23) sur la chaîne d'entraînement du dispositif de réglage.

2. Dispositif de commande selon la revendication 1, **caractérisé en ce que** le frein de lacet (30) permet de bloquer la chaîne d'entraînement ou une partie de cette chaîne d'entraînement comprenant l'engrenage (23).

3. Dispositif de commande selon la revendication 1 ou 2, **caractérisé en ce que** le frein de lacet (30) agit sur un arbre par l'intermédiaire duquel l'engrenage (23) est couplé avec le dispositif d'entraînement (20).

4. Dispositif de commande selon l'une des revendications précédentes, **caractérisé en ce que** l'organe d'amortissement passif (28) est un embrayage hydrodynamique ou un visco-embrayage.

5. Dispositif de commande selon l'une des revendications précédentes, **caractérisé en ce que** le frein de lacet (30) agit sur un arbre (45) par l'intermédiaire duquel l'engrenage (23) est couplé avec l'organe d'amortissement (28).

6. Dispositif de commande selon la revendication 3 ou 5, **caractérisé en ce que** le frein de lacet (30) permet de bloquer l'arbre (45).

7. Dispositif de commande selon la revendication 3 ou 5 ou selon la revendication 6, **caractérisé en ce que** le frein de lacet (30) comprend un disque de frein (46), relié de manière solidaire en rotation avec l'arbre (45), et au moins un corps de frein (58) qui peut être comprimé contre le disque de frein (46).

8. Dispositif de commande selon l'une des revendications précédentes, **caractérisé en ce que** le frein de lacet (30) constitue, dans l'état actionné, un embrayage à friction qui permet, lorsqu'un moment de rupture est atteint ou dépassé, une rotation du support de machine (4) par rapport à la structure porteuse autour de l'axe de lacet (6).

9. Dispositif de commande selon l'une des revendications précédentes, **caractérisé en ce que**, lors de la panne d'une alimentation électrique du dispositif d'entraînement (20), le dispositif d'entraînement (20) peut être bloqué automatiquement au moyen du frein d'entraînement (27).

10. Éolienne avec une structure porteuse (3), un support de machine (4) logé de manière rotative sur la structure porteuse (3) autour d'un axe de lacet (6) et au moins un dispositif de commande (18) selon l'une des revendications précédentes, **caractérisée en ce que** l'éolienne (1) est un rotor du côté abrité du vent.
